# FASCICULE DE BREVET EUROPEEN

(11) **EP 0 727 253 B1**
(45) Date de publication et mention de la délivrance du brevet: **05.07.2000**
(21) Numéro de dépôt: 96400155.6
(22) Date de dépôt: 23.01.1996
(51) Int. Cl.: B01J 20/34, B01D 53/50

(54) **Procédé et installation de régénération d'absorbants utilisés pour traiter les produits de combustion dans des chaudières thermiques**
Verfahren und Vorrichtung zum Regenerieren von Sorbentien, die verwendet werden zur Behandlung von Brennprodukten in Heizkesseln
Process and plant for regenerating adsorbents used for tracting combustion products in heat boiler

(30) Priorité: 14.02.1995 FR 9501753
(43) Date de publication de la demande: 21.08.1996
(73) Titulaire: INSTITUT FRANCAIS DU PETROLE, 92500 Rueil Malmaison (FR)
(72) Inventeur: Martin, Gérard, F-92500 Rueil-Malmaison (FR); Nougier, Luc, F-75015 Paris (FR); Dolignier, Jean-Christophe, F-75017 Paris (FR)

(56) Documents cités:
- EP-A- 0 254 402
- EP-A- 0 356 658
- EP-A- 0 495 710
- WO-A-87/01050
- DE-A- 3 910 716
- US-A- 5 325 797

## Description

La présente invention concerne le domaine de la combustion thermique et plus particulièrement de la régénération des absorbants utilisés pour traiter les produits issus de la combustion.

Le brevet français FR -2 636 720, au nom de la Demanderesse divulgue une chaudière selon laquelle des agents désulfurants sont injectés dans une zone spécifique, dite chambre de désulfuration intercalée entre la chambre de combustion et une chambre de récupération de chaleur. Les agents désulfurants prévus dans cette installation sont préférentiellement des absorbants calciques non régénérables.

Différents perfectionnements ont été apportés à ce type de chaudières afin d'en augmenter le rendement thermique tout en ayant le rendement le plus élevé possible pour le piégeage des oxydes de soufre notamment.

Un perfectionnement, illustré dans la demande de brevet français FR-2 671 855, a consisté à utiliser des absorbants dits "régénérables" qui sont utilisés in situ c'est-à-dire dans un espace spécialement aménagé de la chaudière, en aval de la chambre de combustion. Ce perfectionnement, qui conserve les avantages des installations utilisant des absorbants non régénérables, notamment au plan de la désulfuration, permet en outre de limiter très sensiblement les quantités d'absorbant usé à mettre en décharge, ce qui est très favorable à la qualité de l'environnement. De plus, la diminution très importante des quantités d'absorbant usé à éliminer permet d'envisager des traitements d'inertage à des coûts non prohibitifs.

Dans l'installation qui vient d'être décrite, il est suggéré que la régénération de l'absorbant peut s'effectuer grâce à un lit fluidisé ou éventuellement à l'aide d'un four tournant.

Il subsiste cependant un problème important d'entraînement des fines particules, et surtout se posent des difficultés technologiques pour la réalisation d'une étanchéité parfaite, à hautes températures et en présence de gaz corrosifs, entre le cylindre et l'extérieur.

Ces mises en oeuvre posent un certain nombre de problèmes essentiellement liés à la faible granulométrie de l'absorbant utilisé. En effet, dans les systèmes à lit fluidisé, la fluidisation de fines particules conduit à la création de chemins préférentiels pour le gaz qui se traduit par un mauvais contact entre le gaz et les particules d'absorbant.

Or, bien entendu, la qualité du contact entre absorbant et gaz à traiter est un élément essentiel pour le rendement de régénération de l'absorbant.

Une solution à ce problème consisterait à mélanger l'absorbant (de fine granulométrie) à des particules d'un matériau inerte de granulométrie plus importante.

Ainsi, lorsque des particules d'absorbant usé de 5 à 20 µm (microns) sont mélangées avec des particules de 100 µm (microns) d'un matériau inerte, on observe une très nette amélioration de la qualité de la fluidisation, mais il est ensuite très difficile de séparer les deux populations de particules, avant de réinjecter l'absorbant régénéré dans l'installation de génération de chaleur. Lorsque le matériau inerte ajouté à l'absorbant présente un granulométrie supérieure de 300 µm (microns) par exemple, alors la séparation des deux populations de particules est plus aisée, mais la qualité de la de fluidisation se dégrade à nouveau, notamment à cause des phénomènes ségrégation qui se développent dans le lit fluidisé : les grosses particules sédimentent dans le bas du lit alors que les fines particules "surnagent" dans la partie supérieure du lit, recréant ainsi le même type de lit qu'avec l'absorbant usé seul.

Un autre problème rencontré avec de tels types d'installations est lié à l'envol des fines particules d'absorbant. Afin de limiter les envols de fines particules il est dès lors nécessaire d'avoir des vitesses de gaz très faibles, ce qui conduit à des tailles d'équipements très importantes.

Le document FR 2 702 392 décrit un autre moyen de régénération, mettant en oeuvre un élévateur vibrant dans lequel l'absorbant et le gaz réducteur circulent préférentiellement à contre-courant. Cependant, à l'usage, l'écoulement de type piston réalisé dans l'élévateur vibrant se révèle difficile, notamment lorsqu'il s'agit de véhiculer des produits pulvérulents.

Par ailleurs, il existe dans les dispositifs connus des zones localement surchauffées, où les températures sont telles que l'activité de l'absorbant s'en trouve perturbée et sa durée de vie diminuée. La présente invention permet d'éviter ces inconvénients.

La simplicité et la compacité de l'installation sont d'autres avantages inhérents à l'invention. En effet, comme il sera expliqué plus loin, dans une seule enceinte se trouvent réunies plusieurs fonctions réalisées auparavant dans plusieurs réacteurs.

Un autre avantage de la présente invention réside dans sa souplesse de fonctionnement qui se traduit notamment au niveau du temps de séjour de l'absorbant, des températures de régénération, des débits de solides. Ces paramètres peuvent avantageusement être modulés et ce d'une façon précise et fiable.

En d'autres termes, un contrôle fiable et précis de l'installation et du processus de fonctionnement associé peuvent être obtenus selon l'invention.

Ainsi la présente invention a pour objet un procédé de régénération d'absorbant usé utilisé pour traiter des gaz non combustibles selon lequel la majeure partie de ladite régénération est réalisée en filtrant et en régénérant simultanément l'absorbant usé sur un élément filtrant, dans une atmosphère réductrice.

Selon l'invention, on utilise comme gaz de régénération un composé gazeux hydrocarboné ayant un nombre de carbone total inférieur à 10, tel que de l'hydrogène, du méthane, de l'éthane, du propane ou de l'isobutane et/ou un mélange desdits gaz.

Avantageusement, on réalise une étape de préchauffage de tout ou partie de l'absorbant à régénérer, avant la régénération.

En outre un décolmatage périodique peut être réalisé simultanément à la régénération-filtration.

De manière préférée, ladite régénération est réalisée en au moins deux étapes :
- une première étape consistant en une régénération réalisée en présence d'un premier gaz de régénération, et
- une deuxième étape consistant en une régénération fine opérée en présence d'un gaz de régénération frais.

Préférentiellement, le gaz de régénération utilisé lors de la première étape est un gaz ayant déjà partiellement servi.

L'invention couvre notamment la régénération d'absorbants des oxydes de soufre utilisés pour le traitement des fumées de combustion ou des gaz de procédé.

L'invention a en outre pour objet une installation de régénération d'absorbant usé utilisé pour traiter des gaz non combustibles et qui comprend un élément filtrant intégré dans une enceinte, caractérisée en ce que l'enceinte est le lieu de la régénération en atmosphère réductrice, de la filtration et du stockage de l'absorbant régénéré, en ce que l'enceinte comprend au moins une entrée pour l'absorbant usé et des gaz de régénération ladite entrée étant placée à proximité de l'élément filtrant, et au moins une entrée pour des gaz de régénération frais ladite entrée étant située en partie basse du réacteur, et en ce que l'élément filtrant est disposé de façon à être en contact direct avec l'ensemble des gaz de régénération ce qui permet d'augmenter le temps de contact entre les gaz de régénération et l'absorbant usé.

Le moyen de régénération peut comprendre un lit fluidisé à proximité de l'entrée des gaz de régénération frais.

Conformément à l'invention, l'installation comprend alors des moyens d'injection d'un gaz de régénération frais, placés au niveau dudit lit fluidisé.

En outre, l'installation selon l'invention peut comprendre un moyen de génération de chaleur placé en amont du moyen de régénération, à travers lequel est préchauffé l'absorbant à régénérer transporté de préférence pneumatiquement avec tout ou partie du gaz de régénération avant d'entrer dans le moyen de régénération.

Par ailleurs elle comprend au moins un échangeur de chaleur destiné à récupérer une partie au moins de la chaleur sensible de l'absorbant régénéré.

Avantageusement, elle comprend en outre au moins un échangeur de chaleur destiné à récupérer au moins une partie de la chaleur sensible des gaz de régénération.

Sans sortir du cadre de l'invention, l'installation comprend en outre un moyen destiné à augmenter la pression des gaz de régénération sortant du moyen de régénération.

D'autres caractéristiques, détails et avantages de la présente invention apparaîtront mieux à la lecture de la description qui va suivre, faite à titre illustratif et nullement limitatif en référence aux dessins annexés selon lesquelles :
- La figure 1 est une représentation schématique d'un mode de réalisation de l'invention;
- La figure 2 est une représentation schématique d'un autre mode de réalisation de l'invention;
- La figure 3 est un schéma portant les températures de fonctionnement des différents composants de l'installation selon la figure 2;
- La figure 4 est une représentation schématique d'un mode particulier de réalisation de l'invention ; et
- La figure 5 est une représentation schématique d'un autre mode spécifique de réalisation de l'invention.

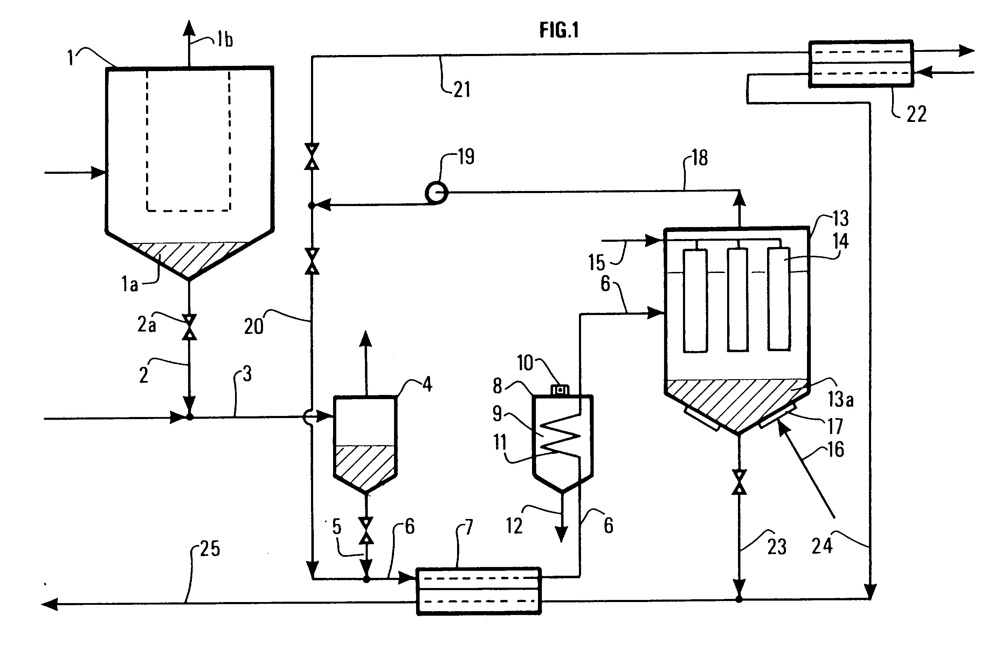

La figure 1 illustre un exemple d'installation selon l'invention.

La référence 1 indique un dépoussiéreur à travers lequel sont filtrés les fumées de sortie d'une chaudière (non représentée) qui, spécifiquement, brûle des combustibles liquides ou gazeux, soufrés.

La sortie d'une chaudière telle que décrite dans la demande de brevet FR 2 671 855 peut ainsi constituer l'entrée de l'élément filtrant 1. La sortie de tout autre moyen générant des effluents pollués et équipé des mêmes moyens de désulfuration des fumées peut bien entendu constituer l'entrée de l'élément 1.

Le dépoussiéreur 1, non indispensable toutefois au bon fonctionnement de l'invention, permet de réaliser une première séparation entre les fumées qui sortent par une cheminée 1b, et l'absorbant usé ayant capté les oxydes de soufre.

Celui-ci est ici évacué gravitairement à travers une sortie la dans une ligne 2. Une vanne 2a ou tout autre moyen équivalent placée sur la ligne 2 peut permettre de stocker temporairement l'absorbant usé à proximité de la sortie 1-a.

En aval, un fluide porteur (fumées...) peut être mélangé à l'absorbant usé afin d'assurer son transport pneumatique, via une ligne 3 jusque dans une trémie de stockage 4.

Le gaz de transport peut être de l'air ou mieux un gaz à faible teneur ou sans oxygène, comme des fumées, de façon à éviter la présence d'oxygène dans la trémie 4 et ainsi de prévenir d'éventuels risques d'explosion si malencontreusement, des gaz de régénération venaient à pénétrer dans ladite trémie 4.

L'absorbant usé est ensuite repris sous ladite trémie 4 à l'aide d'une ligne 5 qui comporte par exemple une écluse rotative et un éjecteur (non référencé) et est envoyé en transport pneumatique vers un réacteur-filtre 13 par une ligne 6. Le gaz utilisé pour le transport de l'absorbant usé est préférentiellement du gaz de régénération prélevé en sortie du réacteur-filtre 13.

Avant d'entrer dans le réacteur-filtre 13, le mélange (absorbant usé et gaz de transport) passe tout d'abord dans un échangeur gaz-gaz 7, dans lequel circulent à contre-courant ledit mélange et un mélange d'absorbant régénéré et de gaz de transport provenant du réacteur-filtre 13. Dans cet échangeur gaz-gaz 7, le mélange (absorbant usé et gaz de transport) récupère une partie de la chaleur sensible de l'absorbant régénéré et du gaz qui le véhicule.

L'échangeur gaz-gaz 7 est conçu pour fonctionner avec des charges en solides importantes, c'est-à-dire pour des rapports massiques solides/gaz pouvant aller jusqu'à dix. Toujours avant d'arriver dans le réacteur-filtre 13, le mélange (absorbant usé et gaz de transport) passe, selon ce mode de réalisation de l'invention, dans un générateur thermique 8, où il est porté à une température voisine de la température de fonctionnement du réacteur-filtre 13.

Le générateur thermique 8 peut comprendre une chambre de combustion 9, un équipement de chauffe 10 fonctionnant avec un combustible liquide ou gazeux et un tube hélicoïdal 11 adossé aux parois de la chambre de combustion 9, dans lequel circule le mélange d'absorbant usé et de gaz de transport.

Les effluents de combustion issus du générateur thermique 8 sont évacués par une cheminée 12 ou dirigés vers un récupérateur de chaleur, qui peut être la chaudière elle-même.

Le mélange (absorbant usé et gaz de transport) entre ensuite dans le réacteur-filtre 13. Ce réacteur-filtre 13 peut comporter plusieurs rangées d'éléments filtrants verticaux 14. L'essentiel de l'absorbant usé, entraîné par le gaz de transport, adhère aux éléments filtrants 14 où il constitue un gâteau. Ce gâteau est régulièrement décolmaté à l'aide d'un dispositif 15, qui crée momentanément une contre-pression en aval des éléments filtrants 14, grâce à l'injection brutale d'une certaine quantité de gaz de régénération ou d'un gaz neutre tel que de l'azote.

Le décolmatage fait tomber le gâteau dans la partie basse 13a du réacteur-filtre, où se constitue une accumulation.

Du gaz de régénération frais apporté par une ligne 16 est introduit dans la partie basse (13-a) du réacteur 13 par l'intermédiaire de diffuseurs 17. Il se constitue ainsi un pseudo lit fluidisé dans cette partie basse 13a, et une partie de l'absorbant peut être réentraînée vers les éléments filtrants 14 disposés au-dessus du lit fluidisé.

De façon caractérisante, les éléments filtrants sont donc ici utilisés comme des moyens permettant d'augmenter le temps de contact solide-gaz et donc d'améliorer ledit contact.

D'une certaine façon, la régénération de l'absorbant s'effectue en deux étapes : une première étape de dégrossissage sur les éléments filtrants 14, en présence d'un gaz de régénération ayant déjà partiellement servi et une étape de finition en pseudo lit fluidisé dans la partie basse 13a du réacteur-filtre, en présence de gaz de régénération frais, donc plus actifs.

Les gaz de régénération déjà partiellement utilisés, sortent du réacteur-filtre 13 par une ligne 18 après avoir percolé à travers successivement la partie basse 13a du réacteur 13 puis les éléments filtrants 14.

Ils peuvent être remis en pression par un ventilateur ou compresseur 19. Une partie des gaz de régénération peut ensuite être recyclée via une ligne 20 et ainsi servir au transport de l'absorbant usé soutiré de la trémie 4. Une autre partie des gaz de régénération est évacuée selon ce mode de réalisation de l'invention via une autre ligne 21 vers une unité de traitement qui peut être par exemple une unité Claus.

Une partie de la chaleur sensible de ces gaz de régénération à évacuer peut être récupérée au niveau d'un échangeur gaz-gaz 22. Dans cet échangeur, circulent à contre-courant lesdits gaz de régénération et un gaz, de préférence pauvre ou sans oxygène pour éviter les risques d'explosion déjà évoqués dans le réacteur-filtre 13. Ce gaz de transport servira au transport de l'absorbant régénéré. Au niveau de l'échangeur 22 le gaz de transport récupère une partie de la chaleur sensible des gaz de régénération à évacuer.

L'absorbant régénéré évacué dans la partie basse 13a du réacteur-filtre peut être repris par une ligne 23 qui comprend par exemple une écluse rotative et un éjecteur (non référencés).

La ligne 23 peut ensuite traverser l'échangeur 7 précité afin de préchauffer l'absorbant usé avant que celui-ci n'atteigne le régénérateur 13.

Dans la ligne 23 le gaz de transport pour l'absorbant régénéré peut provenir de l'échangeur 22 via une ligne 24.

Après passage dans l'échangeur gaz-gaz 7, le mélange absorbant régénéré et gaz de transport peut par exemple être renvoyé, via une ligne 25, vers une zone de désulfuration d'une chaudière ou bien vers un stockage temporaire.

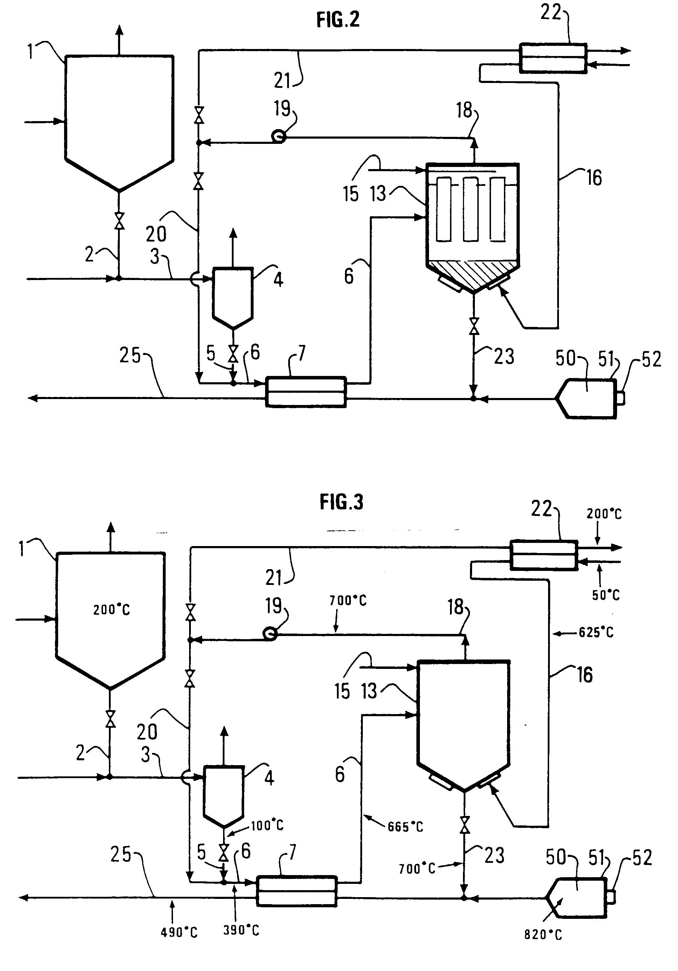

La figure 2 illustre une variante possible de la figure 1, les différences se situant essentiellement, au niveau des moyens de chauffage et de la récupération de l'énergie. La principale différence réside en effet dans la disparition du générateur 8 placé sur la ligne 6.

Ainsi, selon ce mode de réalisation de l'invention, le mélange d'absorbant usé et gaz de transport véhiculé dans la ligne 6 est ici porté par le seul échangeur 7 à une température proche de celle du réacteur-filtre 13. On arrive à ce résultat en surchauffant quelque peu l'absorbant régénéré à l'aide de fumées chaudes issues d'un foyer additionnel 50.

Le foyer additionnel 50 comporte par exemple une chambre réfractorisée 51 équipée d'un brûleur à gaz ou combustibles liquides 52. Le brûleur 51 génère des fumées qui ont une température comprise entre 600 et 1500°C et de préférence entre 700 et 900°C. Les fumées chaudes produites par le foyer 50 sont mélangées à l'absorbant régénéré dans la ligne 23 de sorte qu'elles servent au transport de l'absorbant régénéré par voie pneumatique vers l'échangeur gaz-gaz 7, puis vers la chaudière ou vers un stockage intermédiaire non représentés sur cette figure 2.

Par ailleurs, selon ce mode de réalisation de l'invention, le gaz de régénération frais est préchauffé au niveau de l'échangeur gaz-gaz 22, avant d'être introduit à la partie basse 13a du réacteur-filtre par la ligne 16.

La figure 3 précise les niveaux de température en différents endroits de l'installation selon la figure 2.

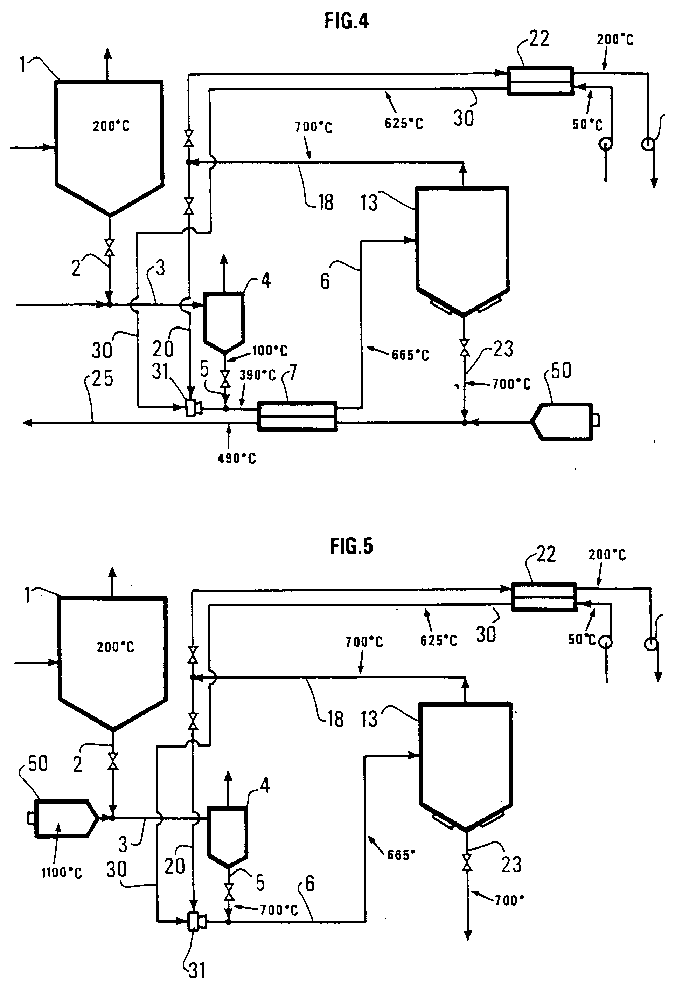

La figure 4 montre un mode de réalisation de l'invention qui diffère de celui de la figure 2 essentiellement par le point d'introduction du gaz de régénération frais.

En effet selon ce mode de réalisation de l'invention, le gaz de régénération frais, après avoir traversé l'échangeur 22, peut être amené via une ligne 30 vers l'échangeur 7, plus précisément en amont de cet échangeur, afin d'être mélangé à l'absorbant usé stocké dans le moyen de stockage 4.

Par ailleurs la pompe 19 a été supprimée car celle-ci peut être endommagée si les gaz transportés dans la ligne 18, sont portés à de trop importantes températures. La pompe 19 peut être remplacée par un moyen 31 permettant de compenser la perte de charge dans le filtre-régénérateur 13 et d'assurer la circulation du gaz de régénération recyclé.

Ainsi un gaz de régénération frais à haute pression peut être utilisé comme fluide moteur du gaz de régénération recyclé et être mélangé au niveau du moyen 31.

Juste en aval du moyen 31, l'absorbant usé à régénérer est mélangé au mélange des gaz de régénération frais et recyclés. Le mélange est ensuite réchauffé dans l'échangeur 7 avant d'atteindre le régénérateur-filtre 13.

Les niveaux de température en différents points de cette installation sont donnés sur la figure 4 elle-même.

La figure 5 illustre une évolution de l'installation selon la figure 4. Ainsi l'échangeur 7 a été supprimé, ce qui évite les problèmes d'encrassement inhérents à ce type de matériel lorsque des gaz fortement chargés en particules le traversent.

Selon ce mode de réalisation de l'invention, l'absorbant régénéré, qui sort du filtre-régénérateur 13, est donc envoyé directement à l'extérieur de l'installation, sans échange de chaleur. Son transport pneumatique peut s'effectuer avec des fumées froides ou avec de l'air.

L'absorbant à régénérer est repris, comme dans le cas de la figure 4 en sortie de la trémie de stockage 4, où il est mélangé avec le gaz de régénération frais et le gaz de régénération recyclé de la façon énoncée ci-avant.

Le préchauffage de l'absorbant usé est réalisé dès la sortie du dépoussiérieur 1, par mise en contact dudit absorbant usé, avec des fumées chaudes ou des gaz de transport chauds en provenance du générateur thermique 50 placé en sortie du dépoussiéreur 1.

A titre illustratif, les températures suivantes ont été relevées : 200°C dans le dépoussiéreur 1 ; 1100°C dans le foyer 50 ; 700°C en sortie de la trémie de stockage 4 ; 700°C en sortie du régénérateur-filtre 13 ; 625°C dans la ligne d'apport en gaz frais.

Le dispositif qui vient d'être décrit est particulièrement adapté à la régénération d'absorbants des oxydes de soufre utilisés pour le traitement des fumées de combustion ou des gaz de procédé.

Ces absorbants ont de préférence une composante magnésienne tel que décrit dans la demande de brevet français 92/08076 au nom de l'IFP, mais d'autres formulations ne sont pas exclues.

La granulométrie moyenne de ces absorbants régénérables est inférieure à 500 µm microns et de préférence inférieure à 50 µm (microns).

Le gaz de régénération peut être de l'hydrogène, du méthane, de l'éthane, du propane, de l'isobutane, et d'une manière générale tout composé gazeux hydrocarboné, ayant un nombre de carbone total inférieur à 10, ou encore tout mélange des gaz cités, tels que les gaz combustibles que l'on trouve en raffinerie et qui contiennent de l'hydrogène, du méthane, du monoxyde de carbone et des hydrocarbures légers.

La température de régénération, c'est-à-dire la température à laquelle opère le filtre est comprise entre 500 et 1000°C et de préférence entre 600 et 800°C.

Le réacteur de régénération est de préférence constitué d'éléments cylindriques filtrants verticaux, superposés les uns aux autres tels qu'on les trouve dans les dispositifs classiques de dépoussiérage. Ces éléments cylindriques, au nombre de plusieurs dizaines, voire plusieurs centaines, ont typiquement des longueurs comprises entre 0,5 et 5 mètres et des diamètres compris entre 2 et 20 cm. Cependant, d'autres montages du type à plaques par exemple, ne sont pas exclus. Les éléments filtrants peuvent être métalliques ou en matériaux céramiques ou assimilés. La porosité et la taille des canaux de ces éléments filtrants sont ajustés suivant les règles classiques de l'art, de façon à assurer une séparation gaz-solide supérieure à 99%, et de préférence supérieure à 99,9%.

Le réacteur-filtre comporte aussi des moyens qui assurent le décolmatage du gâteau d'absorbant déposé sur les éléments filtrants. Ces moyens de décolmatage peuvent être des moyens créant une contre-pression instantanée, des moyens vibrants ou tout autre moyen utilisé classiquement dans le domaine des dépoussiéreurs à manches. La fréquence de décolmatage peut varier entre 10 secondes et une heure et de préférence entre 5 et 20 minutes. La vitesse de passage du gaz de régénération sur le gâteau d'absorbant est comprise entre 0,1 et 10 cm/s, et de préférence entre 0,5 et 2cm/s. Les épaisseurs de gâteau sont comprises entre 0,1 et 5 cm et de préférence entre 0,5 et 2 cm. Le taux de recyclage des gaz de régénération est compris entre 0 et 10 et de préférence entre 1 et 3.

De la description qui précède, il ressort que le filtre-régénérateur 13 selon l'invention est simple et compact. Il permet de réaliser à l'intérieur d'une même enceinte plusieurs fonctions : régénération, filtration des gaz et même stockage de l'absorbant régénéré.

Par ailleurs l'installation selon l'invention présente un caractère modulaire : on peut en effet installer plusieurs régénérateurs-filtre en série ou en parallèle, qui peuvent chacun fonctionner de manière indépendante. Ceci augmente la fiabilité de l'installation, lui donne une très grande souplesse de sorte qu'elle peut traiter des débits très variables d'absorbant usé. Cette possibilité simplifie considérablement l'exploitation tout en conservant une très grande efficacité.

En outre l'installation présente une faible inertie thermique, ce qui permet de corriger rapidement toute dérive de l'un des paramètres opératoires.

Le réacteur-filtre selon l'invention est particulièrement bien adapté à une réaction de régénération qui exige des températures de contact, entre gaz et solides, de plusieurs minutes. De ce fait, le rendement de régénération est très élevé.

L'ensemble de l'installation a été conçu de telle sorte que les problèmes de sécurité sont inexistants. En particulier le risque d'explosion est minime si l'on implante des dispositifs adéquats pour isoler correctement les atmosphères oxydantes de la chaudière et réductrice du régénérateur.

## Revendications

1. Procédé de régénération d'absorbant usé utilisé pour traiter des gaz non combustibles, caractérisé en ce que la majeure partie de ladite régénération est réalisée en filtrant et en régénérant simultanément l'absorbant usé sur un élément filtrant (14), dans une atmosphère réductrice.

2. Procédé selon la revendication 1, caractérisé en ce que l'on utilise comme gaz de régénération un composé gazeux hydrocarboné ayant un nombre de carbone total inférieur à 10, tel que de l'hydrogène, du méthane, de l'éthane, du propane ou de l'isobutane et/ou un mélange desdits gaz.

3. Procédé selon l'une quelconque des revendications précédentes, caractérisé en ce qu'on réalise une étape de préchauffage de tout ou partie de l'absorbant à régénérer, avant la régénération.

4. Procédé selon l'une quelconque des revendications précédentes, caractérisé en ce que l'on réalise périodiquement un décolmatage simultanément à la régénération-filtration.

5. Procédé selon l'une quelconque des revendications précédentes, caractérisé en ce que l'on utilise un absorbant régénérable de granulométrie moyenne inférieure à 500 µm (microns) et de préférence inférieure à 50 µm (microns).

6. Procédé selon l'une quelconque des revendications précédentes, caractérisé en ce que ladite régénération est réalisée en au moins deux étapes :
- une première étape consistant en une régénération réalisée en présence d'un premier gaz de régénération, et
- une deuxième étape consistant en une régénération fine opérée en présence d'un gaz de régénération frais.

7. Procédé selon la revendication 6, caractérisé en ce que le gaz de régénération utilisé lors de la première étape est un gaz ayant déjà partiellement servi.

8. Utilisation du procédé selon l'une quelconque des revendications précédentes, pour la régénération d'absorbants des oxydes de soufre utilisés pour le traitement des fumées de combustion ou des gaz de procédé.

9. Installation de régénération d'absorbant usé utilisé pour traiter des gaz non combustibles et comprenant un élément filtrant (14) intégré dans une enceinte (13), caractérisée en ce que l'enceinte (13) est le lieu de la régénération en atmosphère réductrice, de la filtration et du stockage de l'absorbant régénéré, en ce que l'enceinte (13) comprend au moins une entrée (6) pour l'absorbant usé et des gaz de régénération ladite entrée étant placée à proximité de l'élément filtrant, et au moins une entrée (16, 17) pour des gaz de régénération frais ladite entrée (16, 17) étant située en partie basse (13-a) du réacteur (13), et en ce que l'élément filtrant (14) est disposé de façon à être en contact direct avec l'ensemble des gaz de régénération ce qui permet d'augmenter le temps de contact entre les gaz de régénération et l'absorbant usé.

10. Installation selon la revendication 9, caractérisée en ce que l'enceinte (13) comprend un lit fluidisé (13a) à proximité de l'entrée des gaz de régénération frais.

11. Installation selon la revendication 10, caractérisée en ce qu'elle comprend des moyens (17) d'injection d'un gaz de régénération frais, placés au niveau dudit lit fluidisé (13a).

12. Installation selon l'une quelconque des revendications 9 à 11, caractérisée en ce qu'elle comprend en outre un moyen de génération de chaleur (8) placé en amont du moyen (13) de régénération, à travers lequel est préchauffé l'absorbant à régénérer avant d'entrer dans le moyen de régénération (13).

13. Installation selon l'une quelconque des revendications 9 à 12, caractérisée en ce qu'elle comprend en outre au moins un échangeur de chaleur (7) destiné à récupérer une partie au moins de la chaleur sensible de l'absorbant régénéré.

14. Installation selon l'une quelconque des revendications 9 à 13, caractérisée en ce qu'elle comprend en outre au moins un échangeur de chaleur (22) destiné à récupérer au moins une partie de la chaleur sensible des gaz de régénération.

15. Installation selon l'une quelconque des revendications 9 à 14, caractérisée en ce qu'elle comprend en outre un moyen (19) destiné à augmenter la pression des gaz de régénération sortant du moyen de régénération (13).

16. Installation selon l'une quelconque des revendications 9 à 15, caractérisée en ce que ledit moyen de régénération (13) comprend des éléments filtrants cylindriques superposés les uns aux autres.

## Claims

1. Process for regeneration of used absorbent employed for treating incombustible gases, characterised in that the major part of said regeneration is effected by filtering and simultaneously regenerating the used absorbent on a filtering element (14) in a reducing atmosphere.

2. Process according to claim 1, characterised in that a gaseous hydrocarbon compound having a total carbon number less than 10, such as hydrogen, methane, ethane, propane or isobutane and/or a mixture of said gases, is used as regeneration gas.

3. Process according to any of the preceding claims, characterised in that all or part of the absorbent to be regenerated is subjected to a preheating stage before the regeneration.

4. Process according to any one of the preceding claims, characterised in that declogging is effected periodically simultaneously with the filtration-regeneration.

5. Process according to any one of the preceding claims, characterised in that a regeneratable absorbent is used having a mean grain size of less than 500 µm (microns) and preferably less than 50 µm (microns).

6. Process according to any one of the preceding claims, characterised in that said regeneration is effected in at least two stages:
- a first stage consisting of a first regeneration effected in the presence of a first regeneration gas, and
- a second stage consisting of a fine regeneration effected in the presence of a fresh regeneration gas.

7. Process according to claim 6, characterised in that the regeneration gas used during the first stage is a gas which has already been partly used.

8. Use of the process according to any one of the preceding claims, for regeneration of absorbents of oxides of sulphur used for the treatment of combustion fumes or process gases.

9. Installation for regeneration of used absorbent employed for treating incombustible gases and comprising a filtering element (14) incorporated in an enclosure (13), characterised in that the enclosure (13) is the location for the regeneration in a reducing atmosphere, filtration and storage of the regenerated absorbent, in that the enclosure (13) comprises at least one inlet (6) for the used absorbent and regeneration gases, said inlet being located close to the filtering element, and at least one inlet (16, 17) for fresh regeneration gases, said inlet (16, 17) being located in the bottom part (13a) of the reactor (13), and in that the filtering element (14) is disposed so as to be in direct contact with the entirety of the regeneration gases, which makes it possible to increase the contact time between the regeneration gases and the used absorbent.

10. Installation according to claim 9, characterised in that the enclosure (13) comprises a fluidised bed (13a) close to the inlet for the fresh regeneration gases.

11. Installation according to claim 10, characterised in that it comprises means (17) for injection of a fresh regeneration gas, located on the level of said fluidised bed (13a).

12. Installation according to any one of claims 9 to 11, characterised in that it additionally comprises a means for generation of heat (8) located upstream of the means of regeneration (13) through which the absorbent to be regenerated is preheated before entering the means of regeneration (13).

13. Installation according to any one of claims 9 to 12, characterised in that it additionally comprises at least one heat exchanger (7) designed to recover at least part of the sensible heat of the regenerated absorbent.

14. Installation according to any one of claims 9 to 13, characterised in that it additionally comprises at least one heat exchanger (22) designed to recover at least part of the sensible heat of the regeneration gases.

15. Installation according to any one of claims 9 to 14, characterised in that it additionally comprises a means (19) designed to increase the pressure of the regeneration gases leaving the means of regeneration (13).

16. Installation according to any one of claims 9 to 15, characterised in that said means of regeneration (13) comprises cylindrical filtering elements superposed one upon another.

## Patentansprüche

1. Verfahren zum Regenerieren von verbrauchtem Absorptionsmittel, das verwendet wird, um nicht-brennbare Gase zu behandeln, dadurch gekennzeichnet, daß der größere Teil dieser Regeneration realisiert wird, indem man gleichzeitig das verbrauchte Absorptionsmittel an einem filtrierenden Element (14) in einer reduzierenden Atmosphäre filtriert und regeneriert.

2. Verfahren nach Anspruch 1, dadurch gekennzeichnet, daß man als Regenerationsgas eine kohlenwasserstoffhaltige gasförmige Verbindung, die eine Kohlenstoffgesamtanzahl von weniger als 10, wie Wasserstoff, Methan, Ethan, Propan oder Isobutan und/oder ein Gemisch dieser Gase hat.

3. Verfahren nach einem der vorhergehenden Ansprüche, dadurch gekennzeichnet, daß man eine Stufe der Vorwärmung von dem gesamten zu regenerierenden Absorptionsmittel oder einem Teil hiervon vor der Regenerierung realisiert.

4. Verfahren nach einem der vorhergehenden Ansprüche, dadurch gekennzeichnet, daß man periodisch eine Reinigung gleichzeitig mit der Regeneration-Filtration realisiert.

5. Verfahren nach einem der vorhergehenden Ansprüche, dadurch gekennzeichnet, daß man ein regenerierbares Absorptionsmittel von einer mittleren Granulometrie von weniger als 500 µm (Mikron) und bevorzugt von weniger als 50 µm (Mikron) verwendet.

6. Verfahren nach einem der vorhergehenden Ansprüche, dadurch gekennzeichnet, daß diese Regeneration in wenigstens zwei Stufen durchgeführt wird:
- einer ersten Stufe, die in einer ersten Regeneration besteht, die in Anwesenheit eines ersten Regenerationsgases realisiert wird, und
- einer zweiten Stufe, die in einer feinen Regeneration besteht, die in Anwesenheit eines frischen Regenerationsgases realisiert wird.

7. Verfahren nach Anspruch 6, dadurch gekennzeichnet, daß das anläßlich der ersten Stufe verwendete Regenerationsgas ein Gas ist, das teilweise bereits genutzt wurde.

8. Anwendung des Verfahrens nach einem der vorhergehenden Ansprüche zur Regenerierung von Absorptionsmitteln der Schwefeloxide, welche für die Behandlung von Verbrennungsrauchgasen oder Prozeßgasen eingesetzt wurden.

9. Installation zur Regenerierung von verbrauchtem Absorptionsmittel, welches zur Behandlung der nicht-brennbaren Gase verwendet wurde und ein filtrierendes Element (14), integriert in ein Gefäß (13), umfaßt, dadurch gekennzeichnet, daß das Gefäß (13) der Ort der Regenerierung in reduzierender Atmosphäre, der Filtrierung und der Speicherung des regenerierten Absorptionsmittels ist, daß das Gefäß (13) wenigstens einen Eintritt (6) für das verbrauchte Absorptionsmittel und die Regenerationsgase umfaßt, wobei der Eintritt benachbart dem filtrierenden Element plaziert ist und wenigstens ein Eintritt (16, 17) für frische Regenerationsgase umfaßt, wobei der Eintritt (16, 17) im unteren Teil (13-a) des Reaktors (13) sich befindet, und daß das filtrierende Element (14) derart angeordnet ist, daß es in direktem Kontakt mit der Gesamtheit der Regenerationsgase steht, was es ermöglicht, die Kontaktzeit zwischen den Regenerationsgasen und dem verbrauchten Absorptionsmittel zu erhöhen.

10. Installation nach Anspruch 9, dadurch gekennzeichnet, daß das Gefäß (13) ein Wirbelbett (13a) benachbart dem Eintritt der frischen Regenerationsgase umfaßt.

11. Installation nach Anspruch 10, dadurch gekennzeichnet, daß sie Mittel (17) zur Injektion eines frischen Regenerationsgases umfaßt, die in Höhe dieses Wirbelbettes (13a) angeordnet sind.

12. Installation nach einem der Ansprüche 9 bis 11, dadurch gekennzeichnet, daß sie im übrigen ein Mittel zur Regeneration von Wärme (8) umfaßt, das vor dem Regenerationsmittel (13) angeordnet ist, über das das zu regenerierende Absorptionsmittel vorgewärmt wird, bevor es in das Regenerationsmittel (13) eintritt.

13. Installation nach einem der Ansprüche 9 bis 12, dadurch gekennzeichnet, daß sie im übrigen wenigstens einen Wärmeaustauscher (7) umfaßt, der dazu bestimmt ist, wenigstens einen Teil der fühlbaren Wärme des regenerierten Absorptionsmittels rückzugewinnen.

14. Installation nach einem der Ansprüche 9 bis 13, dadurch gekennzeichnet, daß sie im übrigen wenigstens einen Wärmeaustauscher (22) umfaßt, der dazu bestimmt ist, wenigstens einen Teil der fühlbaren Wärme der Regenerationsgase rückzugewinnen.

15. Installation nach einem der Ansprüche 9 bis 14, dadurch gekennzeichnet, daß sie im übrigen ein Mittel (19) umfaßt, das dazu bestimmt ist, den Druck der Regenerationsgase, die aus dem Regenerationsmittel (13) austreten, zu erhöhen.

16. Installation nach einem der Ansprüche 9 bis 15, dadurch gekennzeichnet, daß dieses Regenerationsmittel (13) filtrierende zylindrische einander überlagerte Elemente umfaßt.
